# EUROPÄISCHE PATENTSCHRIFT

(11) **EP 2 160 148 B1**
(45) Veröffentlichungstag und Bekanntmachung des Hinweises auf die Patenterteilung: **26.12.2018**
(21) Anmeldenummer: 08773384.6
(22) Anmeldetag: 11.06.2008
(51) Int. Cl.: A61C 17/40, A61C 17/34

(54) **ELEKTRISCHE ZAHNBÜRSTE**
ELECTRIC TOOTHBRUSH
BROSSE À DENTS ÉLECTRIQUE

(30) Priorität: 28.06.2007 DE 102007029972
(43) Veröffentlichungstag der Anmeldung: 10.03.2010
(73) Patentinhaber: Braun GmbH, 61476 Kronberg/Taunus (DE)
(72) Erfinder: KRAUS, Bernhard, 35618 Braunfels (DE); ZIEGLER, Frank, 60489 Frankfurt/Main (DE); SCHOBER, Uwe, 61479 Glashütten (DE); SCHÄFER, Robert, 60486 Frankfurt/Main (DE); NEYER, Christian, 65760 Eschborn (DE)
(74) Vertreter: Schneider, Stefan Michael
(86) Internationale Anmeldenummer: PCT/EP2008/004645
(87) Internationale Veröffentlichungsnummer: WO 2009/000418

(56) Entgegenhaltungen:
- WO-A-03/024353
- WO-A-2005/058189
- DE-A1-102004 036 812
- DE-A1-102005 045 226
- US-A- 5 189 751
- US-A- 5 784 742

## Beschreibung

Die vorliegende Erfindung betrifft elektrische Zahnbürsten, und zwar einerseits das Zahnbürstenhandteil einer elektrischen Zahnbürste, mit einem Handteilgehäuse, einem auf einer ersten Gehäusestirnseite aus dem Handteilgehäuse herausragenden, vorzugsweise stabförmigen, Antriebsübertrager, an dem eine Aufsatzbürste befestigbar ist, sowie einem Antriebsmotor zur Bewegung des Antriebsübertragers, wobei der Antriebsübertrager durch eine Lagervorrichtung im Inneren des Handteilgehäuses nach Art einer Wippe derart gelagert ist, daß der Antriebsübertrager quer zu seiner Längsachse vom Antriebsmotor hin und her schwenkbar ist. Die Erfindung betrifft andererseits die gesamte Zahnbürste umfassend ein solches Zahnbürstenhandteil und eine Aufsatzbürste.

Um die für die Zahnreinigung wichtige Putzbewegung in Längsrichtung der Zähne, also parallel zu den Grenzflächen zwischen benachbarten Zähnen, zu unterstützen, wurden bereits elektrische Zahnbürsten vorgeschlagen, bei denen das Borstenfeld quer zur Längsrichtung des Bürstenrohrs und quer zur Borstenhauptrichtung des Borstenfeldes angetrieben wird. Hierzu kann ein üblicherweise stabförmiger Antriebsübertrager, der üblicherweise stirnseitig aus dem Handteilgehäuse herausragt, von einem elektromechanischen Aktor quer zur Längsachse des Antriebsübertragers angetrieben werden, so dass eine auf dem Antriebsübertrager befestigte Aufsatzbürste die gewünschte Putzbewegung in Form einer Oszillationsbewegung ausführt.

Für sogenannte Schall-Zahnbürsten, ist eine Reihe von unterschiedlichen Antrieben bekannt. Bei manchen Antrieben werden zur Lagerung des Antriebsübertragers Lager, beispielsweise Kugellager, verwendet, was jedoch aufwendig und teuer ist und zudem oft zu unangenehmen Geräuschen sowie zu einer Motordämpfung führt. Bei anderen Antrieben werden Federn zur Lagerung des Antriebsübertragers eingesetzt, was jedoch einen komplexen und aufwendigen Aufbau, insbesondere der Aufsatzbürsten, zur Folge hat.

Aus der US 2006/0225230 A1 ist eine Zahnbürste bekannt, deren Borstenfeld quer zur Zahnbürstenlängsrichtung hin- und hergehend antreibbar ist. Hierzu ist ein relativ komplizierter Getriebemechanismus mit mehreren Zahnradstufen und einer Taumelscheibe vorgesehen, der die rotatorische Antriebsbewegung eines Elektromotors in die gewünschte hin- und hergehende Putzbewegung der Aufsatzbürste umwandelt.

Weiterhin ist aus der DE 29 31 479 ein Antriebsgetriebe bekannt, das eine Drehbewegung in eine hin- und hergehende Kippbewegung umwandelt. Zwar nennt diese Schrift als Einsatzgebiet auch Zahnbürsten, allerdings baut der Getriebemechanismus derart sperrig, dass eine Integration in einen schlanken Zahnbürstenkorpus kaum möglich ist.

Ein grundsätzliches Problem solcher Zahnbürsten mit einer translatorischen Querbewegung des Borstenfeldes ist dabei auch die Tatsache, dass die Querbewegung nicht nur am Borstenfeld, sondern auch im Bereich des Bürstenrohres auftritt, was einerseits zu einem für einen Benutzer unangenehmen Empfinden im Bereich der Schneidezähne und der Lippen führen kann und zum anderen auch eine unerwünschte Antriebsdämpfung sowie Probleme mit der Erzeugung ausreichender Bewegungsamplituden nach sich ziehen kann.

Gemäß der WO 03/024353 A1, auf welcher die zweiteilige Form des Anspruchs 1 basiert, ist ein Zahnbürstenhandteil bekannt, das einen Antrieb mit einem Motor ausweist, wobei der Antrieb einen Übertrager aufweist, und der Übertrager als Antriebswippe vorgesehen ist, die mehrachsig wippbar gelagert ist. Zur Lagerung des Übertragers zwischen Motor und einem angetriebenen Borstenträger ist ein hülsen- bzw. ringförmiges Lagerelement vorgesehen, das im Bürstenrohr angeordnet ist.

Die WO 2005/058189 A1 beschreibt eine nodal montierte rotierende Zahnbürste bei der ein vom Handteil der Zahnbürste abnehmbarer Kopfteil eine Federanordnung aufweist, die zwei Federsektionen hat, wobei die Federanordnung einen Knotenpunkt hat und an diesem Knotenpunkt mittels eines Knotenpunktbefestigungselements an einer Kappe des Kopfteils befestigt ist. Ein Antriebsschaft ist an einem Ende der Federanordnung befestigt und trägt an seinem freien Ende einen Bürstenkopf.

Die US 5 784 742 beschreibt eine elektrische Zahnbürste mit einer Antriebsanordnung zum Antreiben eines Bürstenkopfes in einem oszillierenden Muster, wobei ein elektromagnetisch angetriebener Antriebsschaft der Antriebsanordnung federgelagert am Gehäuse der Zahnbürste montiert ist.

Die DE 10 2004 036 812 A1 beschreibt eine elektrische Zahnbürste mit einem Antrieb zum oszillierenden Antreiben eines Bürstenkopfes. Zum Antreiben des Bürstenkopfes ist eine Antribswippe vorgesehen, die kugelgelenkartig an einem Gelenkpunkt gelagert ist.

Die US 5 189 751 beschreibt eine vibrierende Zahnbürste mit einem elektromagnetischen Antrieb. Ein Hebelarm ist mittels einer Achse am Gehäuse gelagert.

Die DE 10 2005 045 226 A1 beschreibt eine elektrische Zahnbürste mit einem Handteil, in dem ein Antriebsmotor angeordnet ist, und einem Bürstenteil mit einem im wesentlichen stabförmigen Bürstenträger, der an seinem auskragenden Ende einen Bürstenkopf trägt. Der Bürstenträger ist an einem Verbindungsstück des Bürstenteils über ein Kugelgelenk nach Art einer Wippe mehrachsig schwenkbar gelagert.

Der vorliegenden Erfindung liegt hiervon ausgehend die Aufgabe zugrunde, eine verbesserte Zahnbürste der genannten Art sowie ein verbessertes Zahnbürstenhandteil hierfür zu schaffen, die Nachteile des Standes der Technik vermeiden und letzteren in vorteilhafter Weise weiterbilden. Insbesondere soll ein Antrieb mit besonders einfachem und kostengünstigem Aufbau geschaffen werden, der trotz geringer Vibrationsamplitude im Bereich der Lippen eine effiziente Putzbewegung im Bereich des Borstenfeldes und damit eine hohe Putzleistung bewirkt.

Diese Aufgabe wird durch ein Zahnbürstenhandteil gemäß Anspruch 1 sowie eine Zahnbürste gemäß Anspruch 14 gelöst. Bevorzugte Ausgestaltungen der Erfindung sind Gegenstand der abhängigen Ansprüche.

Es wird also vorgeschlagen, trotz Lagerung des Antriebsübertragers im Inneren des Handteilgehäuses das Bewegungszentrum der Wipp- bzw. Schwenkbewegung des Antriebsübertragers und der daran befestigten Aufsatzbürste aus dem Handteilgehäuse hinaus in Richtung zum Borstenfeld hin zu verschieben, und zwar insbesondere in einen Bürstenrohrabschnitt, der beim Zähneputzen etwa im Bereich der Lippen liegt, so dass das Borstenfeld um das genannte Bewegungszentrum herum schwenken bzw. schwingen kann und trotzdem das Bürstenrohr im Bereich der Lippen keine bzw. nur eine geringe Bewegung ausführt. Erfindungsgemäß hält die Lagervorrichtung den Antriebsübertrager schwenkbar um einen Drehpunkt, der außerhalb des Handteilgehäuses liegt. Hierdurch kann eine effiziente Putzbewegung mit einer großen Putzamplitude im Bereich des Borstenfeldes mit einer geringen Vibrationsamplitude der Zahnbürste im Bereich der Lippen kombiniert werden. Der genannte Drehpunkt ist dabei insbesondere derart weit aus dem Handteilgehäuse heraus verschoben, dass er vorzugsweise zwischen dem Borstenfeld der Aufsatzbürste und dem stirnseitigen Ende des Handteils im Bereich der Lippen eines Benutzers zu liegen kommt.

Die Lagervorrichtung für den Antriebsübertrager kann unterschiedlich ausgebildet sein. Erfindungsgemäß ist die Lagervorrichtung eine mehrgelenkige Aufhängung, in Form eines Viergelenks mit zwei Lagerschenkeln, die jeweils an ihrem einen Ende gelenkig an dem Antriebsträger befestigt sind und mit ihrem anderen Ende gelenkig an dem Handteilgehäuse bzw. einem handteilgehäusefesten Teil, wie beispielsweise einem Motorgruppenträger, befestigt sind. Die mehrgelenkige Aufhängung ist hierbei hinsichtlich ihrer Kinematik derart ausgebildet, dass sie den genannten Drehpunkt außerhalb des Handteilgehäuses definiert. Vorteilhafterweise kann die Aufhängung dabei in Form eines einfachen Viergelenks aufgebaut sein, dessen Lagerschenkel im wesentlichen zueinander parallele Drehachsen aufweisen.

Vorzugsweise kann die Lagervorrichtung für den Antriebsübertrager aus zwei einfachen Federelementen bestehen, beispielsweise Blattfedern, die den Antriebsübertrager nach Art eines Viergelenks halten und hierzu jeweils mit ihrem einen Ende an dem Antriebsübertrager befestigt und mit ihrem anderen Ende an dem Handteilgehäuse bzw. einem handteilgehäusefesten Teil befestigt sind. Anstelle Blattfedern können allgemein auch andere Biegefederelemente, beispielsweise in Form stabförmiger Biegefedern, Verwendung finden, wobei jedoch Blattfedern mit ihren unterschiedlichen Steifigkeiten in unterschiedlichen Richtungen bevorzugt und für die Aufhängung des Antriebsübertragers besonders geeignet sind. Durch die biegsame, elastische Ausbildung brauchen die Blattfedern hierbei nicht gelenkig gelagert werden, vielmehr können sie an ihren Enden starr befestigt werden, wobei eine besonders kostengünstige Ausbildung dadurch gegeben sein kann, wenn die Blattfedern an den Antriebsübertrager, ein diesen haltendes Verbindungsstück, einen Antriebsmotorträger und/oder ein Gehäuseteil angeformt sind, insbesondere wenn die Blattfedern aus Kunststoff spritzgegossen werden. Durch die Aufhängung des Antriebsübertragers mittels Blattfedern kann ungeachtet der Anordnung des vorgenannten Drehpunktes für den Antriebsübertrager eine besonders einfache Ausbildung der Aufhängung für den Antriebsübertrager bei trotzdem günstiger Kinematik der Antriebsbewegung erreicht werden. Zudem können ungeachtet einer bestimmten Position des Drehpunktes Dämpfungsprobleme weitgehend vermieden werden.

Die Dimensionierung der Blattfedern bzw. der Lagerschenkel des Viergelenks und deren Anordnung und Ausrichtung können grundsätzlich an die Gestaltung des Zahnbürstenhandteils bzw. der Aufsatzbürste angepasst werden, wobei je nach Fallkonstellation beispielsweise die Länge der Blattfedern bzw. der Lagerschenkel, die Positionierung der Anlenkpunkte und/oder die Winkelausrichtung der Blattfedern bzw. Lagerschenkel im Raum verändert werden können. Nach einer vorteilhaften Ausführung der Erfindung kann dabei vorgesehen sein, dass die Lagerschenkel bzw. die Blattfedern zueinander spitzwinklig geneigt angeordnet sind, so dass die Längsachsen zum Bewegungszentrum des Antriebsübertragers bzw. der darauf befestigten Aufsatzbürste hin zusammenlaufen. Insbesondere können die Lagerschenkel bzw. die Blattfedern derart zueinander schräg verlaufend angeordnet sein, dass gedachte Verlängerungslinien durch die Längsachsen der Lagerschenkel bzw. der Blattfedern einen Schnittpunkt auf der Längsachse des Antriebsübertragers außerhalb des Handteilgehäuses definieren, wobei der Schnittpunkt nicht zwangsweise auf dem Antriebskorpus selbst, sondern ggf. auch auf der darüber hinaus virtuell verlängerten Längsachse des Antriebsübertragers liegen kann.

Der Neigungswinkel der Lagerschenkel bzw. der Blattfedern kann hierbei vorteilhafterweise in einem Winkelbereich zwischen 10° und 75°, vorzugsweise zwischen 15° und 45° und insbesondere etwa im Bereich von 20° bis 40° liegen.

In Weiterbildung der Erfindung sind dabei die Lagerschenkel des Mehrgelenks bzw. die vorgenannten Blattfedern in einer gemeinsamen Ebene liegend angeordnet, die die Lagerebene der Lagervorrichtung bildet und/oder die Bewegungsebene der Lagerschenkel bzw. der Biegefederelemente definiert, in der die genannten Lagerschenkel bzw. Federelemente ihre Bewegung ausführen.

Der mit dem Antriebsübertrager gekoppelte Antriebsmotor selbst kann unterschiedlich ausgebildet sein. Beispielsweise kann die Drehbewegung eines rotierenden Elektromotors über ein Koppelglied oder dergleichen in eine hin- und hergehende Bewegung umgewandelt und auf den Antriebsübertrager übertragen wird. In bevorzugter Ausführung der Erfindung ist der Antriebsmotor jedoch als Linearmotor, vorzugsweise magnetischer Oszillationsmotor, ausgebildet, der unmittelbar eine lineare Hin- und Herbewegung erzeugt, die auf den Antriebsübertrager übertragen wird. Die Antriebsbewegung des Antriebsmotors liegt hierbei vorteilhafterweise in einer Antriebsebene, insbesondere kann sie einachsig ausgebildet sein.

Um eine ebene Wippbewegung des Antriebsübertragers und der daran befestigten Aufsatzbürste zu erzeugen, wird der Antriebsmotor in Weiterbildung der Erfindung derart ausgerichtet, dass seine Antriebsebene bzw. seine lineare Antriebsachse sich parallel zu der vorgenannten Lagerebene erstreckt, in der die Lagerschenkel bzw. die Federelemente der Lagervorrichtung angeordnet sind. Der Antriebsübertrager wippt hierdurch in einer Ebene parallel zur Antriebsbewegung des Antriebsmotors.

Alternativ hierzu kann jedoch auch eine räumliche Antriebsbewegung des Antriebsübertragers erzeugt werden. Insbesondere kann trotz Verwendung eines Linearmotors als Antriebsmotor der Antriebsübertrager auf einer im wesentlichen doppelkegelförmigen Antriebsbahn bewegt werden. Hierzu kann die Antriebsebene des Antriebsmotors gegenüber der vorgenannten Lagerebene der Lagervorrichtung, in der die Lagerschenkel des Mehrgelenks bzw. die Blattfedern der Lagervorrichtung angeordnet sind, spitzwinklig verkippt werden, wobei vorzugsweise eine Verkippung von weniger als 45° erfolgt. Hierdurch wird eine sozusagen räumliche Wippbewegung des Antriebsübertragers auf einer im wesentlichen doppelkegelförmigen Antriebsbahn mit vorzugsweise elliptischem Kegelquerschnitt erzeugt. Der eingangs genannte Drehpunkt des Antriebsübertragers bildet dabei die Einschnürung der genannten doppelkegelförmigen Antriebsbahn, wobei der Drehpunkt selbst nicht ein tatsächlich raumfester Punkt sein muss, sondern selbst auf einer Bewegungsbahn umlaufen kann, die jedoch gegenüber der Bewegungsamplitude des Borstenfelds sehr viel kleiner ist.

Vorzugsweise bildet der Antriebsübertrager zusammen mit der daran befestigten Aufsatzbürste und ggf. weiteren oszillierend mitbewegten Teilen, wie Antriebsmagneten, Kupplungsstücken etc., einen schwingungsfähigen Antriebsstrang, wobei in besonders vorteilhafter Weise die Resonanzfrequenz des Antriebsstrangs auf die Schwingungsfrequenz des Motors abgestimmt ist bzw. umgekehrt. Das Schwingungssystem kann derart ausgelegt sein, dass das Borstenfeld der Aufsatzbürste und der Antriebsmotor gegenphasig oder gleichphasig schwingen, wobei im letztgenannten Fall entlang des Antriebsstrangs umfassend die Aufsatzbürste und den Antriebsübertrager zwei Schwingungsknoten vorhanden sind. Vorteilhafterweise wird hierbei die Aufhängung durch die vorgenannten Biegefederelemente bzw. Blattfedern so gewählt, dass der durch die Federelemente definierte Drehpunkt in einem der Knotenpunkte liegt. Der andere Knotenpunkt kann vorteilhafterweise im Bereich der Aufsatzbürste im Bereich der Lippen liegen, wobei in diesem Falle der vorgenannte Drehpunkt nicht im Bereich der Lippen, sondern näher am Zahnbürstenhandteil liegt. Die Federelemente können als Resonanzfedern des Schwingungssystems dienen.

Durch die vorgenannte Mehrgelenks- bzw. Biegefederaufhängung des Antriebsübertragers kann in einfacher Weise die beim Zähneputzen erfolgende Presskraft erfasst werden, d.h. der Anpressdruck, mit dem ein Benutzer die Zahnbürste gegen die Zähne drückt. Insbesondere kann hierzu in Weiterbildung der Erfindung eine Querbelastungserfassungseinrichtung dem Antriebsübertrager und/oder dem Antriebsmotor zugeordnet sein. Durch die Aufhängung des Antriebsübertragers entsteht bei Druck auf das Borstenfeld eine relative Auslenkung des Antriebsmotors bzw. dessen Antriebselement, die sich in einfacher Weise insbesondere mittels eines Magnetfeldsensors leicht messen lässt.

Die Querbelastungserfassung kann in vorteilhafter Weise dazu genutzt werden, den Antriebsmotor anzusteuern. Hierzu ist eine mit der Querbelastungserfassungseinrichtung verbundene Steuereinrichtung vorgesehen, die insbesondere die Oszillationsamplitude und/oder die Oszillationsfrequenz des Antriebsmotors in Abhängigkeit der erfassten Andruckkraft steuert. Beispielsweise kann bei übermäßigem Andrücken des Borstenfeldes auf die Zähne die Oszillationsamplitude und/oder die Oszillationsfrequenz verlangsamt, ggf. auch gänzlich gestoppt werden. Alternativ oder zusätzlich kann die Steuereinrichtung eine Anzeige ansteuern, die dem Benutzer den ausgeübten Andruck anzeigt bzw. den Benutzer warnt, wenn mit zu hohem Druck geputzt wird. Weiterhin alternativ oder zusätzlich kann die Steuereinrichtung in Abhängigkeit der erfassten Querbelastung auch eine Startsteuerung verwirklichen, insbesondere dahingehend, dass der Antriebsmotor automatisch gestartet wird, wenn ein bestimmter Andruck vorliegt und/oder über eine bestimmte Zeit aufrechterhalten wird.

Die Erfindung wird nachfolgend anhand bevorzugter Ausführungsbeispiele und zugehöriger Zeichnungen näher erläutert. In den Zeichnungen zeigen:

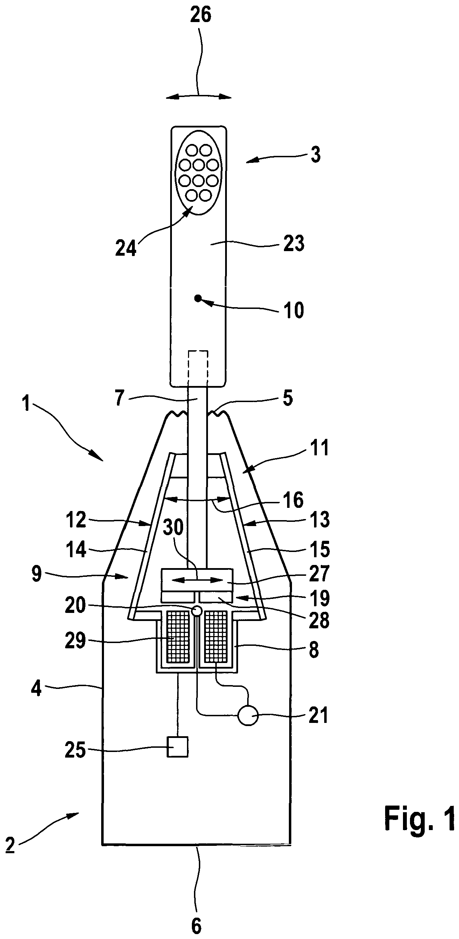

- Fig. 1:: eine schematische Draufsicht auf eine elektrische Zahnbürste nach einer vorteilhaften Ausführung der Erfindung, die die Aufhängung des Antriebsübertragers und des diesen antreibenden Antriebsmotors schematisch zeigt,

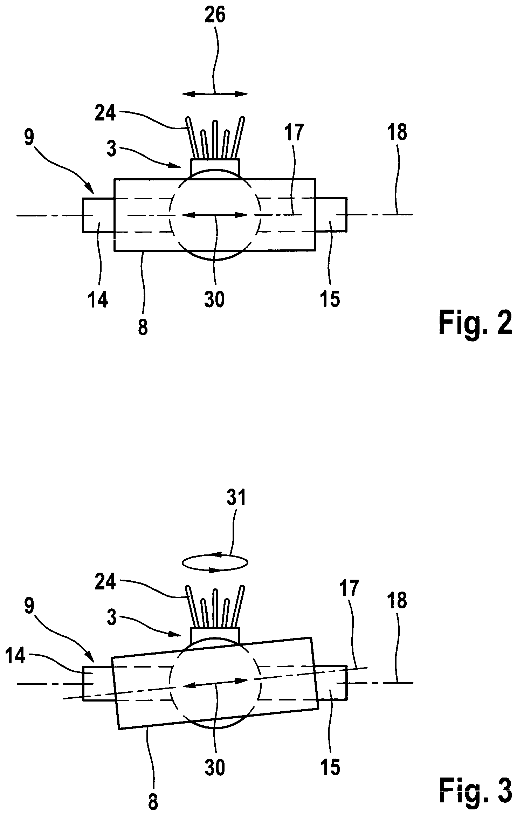

- Fig. 2:: eine schematische Ansicht der Aufhängung des Antriebsübertragers und des Antriebsmotors in einer Blickrichtung parallel zur Längsachse der Zahnbürste, wobei der Antriebsmotor mit seiner Antriebsebene parallel zur Lagerebene der Aufhängung angeordnet ist, um eine ebene Wippbewegung der Aufsatzbürste zu erzeugen,
- Fig. 3:: eine schematische Ansicht der Aufhängung des Antriebsübertragers und des Antriebsmotors in einer Blickrichtung parallel zur Zahnbürstenlängsachse ähnlich Fig. 2, wobei gemäß Fig. 3 die Antriebsebene des Antriebsmotors gegenüber der Lagerebene der Aufhängung des Antriebsübertragers verkippt ist, um eine elliptische Bewegungsbahn des Borstenfeldes der Aufsatzbürste zu erzeugen, und

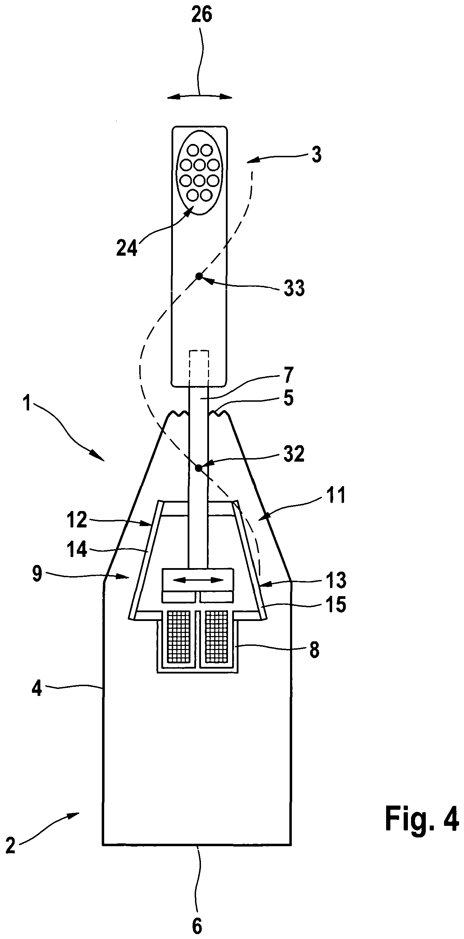

- Fig. 4:: eine schematische Draufsicht auf eine Zahnbürste ähnlich Fig. 1 nach einer weiteren bevorzugten Ausführung der Erfindung, gemäß der der Antriebsstrang einen Resonanzschwingkörper bildet, wobei in der Darstellung die beiden sich entlang des Antriebsstranges bildenden Schwingungsknoten gezeigt sind.

Die in Figur 1 gezeichnete Zahnbürste 1 umfasst ein längliches, im wesentlichen stabförmiges Zahnbürstenhandteil 2 sowie eine an das Zahnbürstenhandteil 2 ansetzbare Aufsatzbürste 3, die ein im wesentlichen stabförmiges Bürstenrohr 23 sowie ein daran befestigtes Borstenfeld 24 umfassend eine Mehrzahl von Borstenbüscheln aufweist.

Die Aufsatzbürste 3 ist starr, jedoch lösbar an einem stabförmigen Antriebsübertrager 7 befestigt, der auf einer ersten Stirnseite 5 aus dem Handteilgehäuse 4 des Zahnbürstenhandteils 2 herausragt. Das Handteilgehäuse 4 beherbergt in seinem Inneren einen Antriebsmotor 8, eine den Antriebsmotor 8 speisende Energieversorgung 25 beispielsweise in Form eines Netzteiles oder eines Energiespeichers wie Batterien oder Akkus, sowie eine Steuervorrichtung 21 zur Ansteuerung des Antriebsmotors 8.

Wie Figur 1 zeigt, erstreckt sich der Antriebsübertrager 7 ein Stück weit in das Handteilgehäuse 4 hinein, wobei in der gezeichneten Ausführungsform der im Inneren des Handteilgehäuses 4 liegende Abschnitt des Antriebsübertragers 7 eine größere Länge besitzt als der über die erste Stirnseite 5 des Handteilgehäuses 4 überstehende Abschnitt des Antriebsübertragers 7. Im Inneren des Handteilgehäuses 4 ist für den Antriebsübertrager 7 eine Lagervorrichtung 9 vorgesehen, die den Antriebsübertrager 7 beweglich lagert, so dass der Antriebsübertrager 7 Querbewegungen quer zu seiner Längsachse und insbesondere Kipp- bzw. Wippbewegungen um eine zur Zeichenebene der Figur 1 senkrechte Achse ausführen kann, so dass das Borstenfeld 24 der daran befestigten Aufsatzbürste 3 quer zur Aufsatzbürstenlängsachse und quer zur Borstenhauptrichtung, die zur Zeichenebene der Figur 1 senkrecht steht, hin und her oszillieren kann. Die in Figur 1 mit der Bezugsziffer 26 gekennzeichnete Borstenfeldbewegungsrichtung entspricht einem Auf- und Abwischen entlang der Zahnflanken im wesentlichen parallel zu den Zahnzwischenräumen.

Die Lagervorrichtung 9 besteht dabei in der in Figur 1 gezeichneten Ausführungsform aus zwei schrägen Blattfedern 14, 15, die mit ihrem einen Ende fest mit dem Antriebsübertrager 7 verbunden sind und an ihrem gegenüberliegenden anderen Ende an einem handteilgehäusefesten Punkt, beispielsweise einer nicht eigens gezeichneten Motorträgergruppe, starr befestigt sind. Die Blattfedern 14 und 15 bilden dabei die Lagerschenkel 12 und 13 eines Viergelenks 11, durch das der Antriebsübertrager 7 in der Lagerebene 18, die der Zeichenebene der Figur 1 entspricht und von den beiden Blattfedern 14 und 15 aufgespannt wird, hin- und herbewegbar ist. Durch die viergelenkartige Ausbildung der Lagervorrichtung 9 definiert letztere für den Antriebsübertrager 7 dabei einen virtuellen Drehpunkt 10, der trotz Anordnung der Lagervorrichtung 9 im Inneren des Handteilgehäuses 4 außerhalb des Handteilgehäuses 4 liegt, und zwar zwischen der ersten Stirnseite 5 des Handteilgehäuses 4 und dem Borstenfeld 24 der Aufsatzbürste 3. Vorteilhafterweise ist die Anordnung der Lagervorrichtung 9 dabei derart getroffen, dass der genannte Drehpunkt 10 in einem - grob gesprochen - mittigen Abschnitt des Bürstenrohrs 23 liegt, das beim Zähneputzen etwa im Bereich der Lippen zu liegen kommt. Hierdurch tritt im Bereich der Lippen eine nur kleine Bewegungsamplitude der Aufsatzbürste 3 auf, während im Bereich des Borstenfelds 24 dennoch eine große Bewegungsamplitude und hierdurch eine effiziente Putzbewegung entsteht.

Der Antriebsübertrager 7 und die daran befestigte Aufsatzbürste 3 werden nämlich von dem Antriebsmotor 8 nach Art einer Wippe oszillierend um den genannten Drehpunkt 10 hin- und hergeschwenkt. Vorteilhafterweise ist der Antriebsmotor 8 hierzu als Linearmotor in Form eines magnetischen Oszillationsmotors ausgebildet, der ein linear hin- und hergehendes Antriebsstück 27 aufweist. Figur 1 zeigt schematisch die Ausbildung des Antriebsmotors 8 in Form zweier Magneten 28 und zugehöriger Spulen 29, die bei entsprechender Anregung die Magnete 28 hin- und herbewegen, die wiederum das Antriebsstück 27 entsprechend dem Bewegungspfeil 30 linear hin- und herbewegen. Das linear antreibbare Antriebsstück 27 ist mit dem im Handteilgehäuse 4 liegenden Ende des Antriebsübertragers 7 gekoppelt, so dass dieses entsprechend hin- und herbewegt wird, wodurch eine entsprechende Schwenkbewegung um den Drehpunkt 10 entsteht.

Wie Figur 2 zeigt, kann dabei die Antriebsebene 17, in der die Bewegungsrichtung des Antriebsstücks 27 liegt, vorteilhafterweise parallel zu der vorgenannten Lagerebene 18 liegen, die von den Blattfedern 14 und 15 aufgespannt wird. Hierdurch entsteht eine zweidimensionale Wippbewegung des Antriebsübertragers 7 in der genannten Lagerebene 18.

Alternativ hierzu kann der Antriebsmotor 8 mit seiner Antriebsebene 17 auch gegenüber der vorgenannten Lagerebene 18 verkippt werden, wie dies Figur 3 zeigt. Dementsprechend verläuft die Bewegungsrichtung 30 des Antriebsstücks 27 spitzwinklig geneigt zu der vorgenannten Lagerebene 18 der Lagervorrichtung 9, wobei der Verkippungswinkel zwischen Antriebsebene 17 und Lagerebene 18 vorteilhafterweise weniger als 45°, vorzugsweise weniger als 25°, betragen kann. Durch die genannte Verkippung wird eine räumliche Antriebsbewegung des Antriebsübertragers 7 erzeugt, der auf einer doppelkegelförmigen Antriebsbahn um den Drehpunkt 10 herum oszilliert, wobei je nach Verkippungswinkel der Antriebsebene 17 der Querschnitt des genannten Doppelkegels mehr oder minder flach gedrückt ist. Bei der in Figur 3 gezeichneten, nur leichten Verkippung entsteht eine elliptische Umlaufbewegung des Borstenfeldes 24, wie dies mit der Bezugsziffer 31 angedeutet ist, vgl. Figur 3. Hierdurch erhält das Borstenfeld 24 zusätzlich zu der Wischbewegung entlang der Zahnflanken zusätzlich eine Stocherbewegung im wesentlichen senkrecht zu den Zahnflanken, die ein besseres Eindringen der Borsten in die Zahnzwischenräume ermöglicht.

Die Lage des virtuellen Drehpunktes 10 wird vorteilhafterweise so gewählt, dass die Vibration im Zahnbürstenhandteil 2 minimal wird. Hierzu wird der Drehpunkt 10 vorteilhafterweise in den Massenschwerpunkt des von den bewegten Teilen der Zahnbürste gebildeten Schwingungssystems gelegt. Vorteilhafterweise werden die Massen des Antriebsstranges umfassend die Aufsatzbürste 3, den Antriebsübertrager 7, das daran befestigte Antriebsstück 27 und die Magnete 28 derart verteilt, dass der Massenschwerpunkt des schwingenden Antriebsstrangs im Bereich des Bürstenrohrs 23 der Aufsatzbürste 3 und insbesondere im Bereich des Drehpunktes 10 liegt.

Es ist vorteilhaft, die Steifigkeit des genannten Antriebsstrangs so zu wählen, dass der Antriebsstrang umfassend die Aufsatzbürste 3, den Antriebsübertrager 7, das Antriebsstück 27 des Antriebsmotors 8 und dessen sich hin- und herbewegende Magnete 28 eine Resonanzfrequenz besitzt, die auf die Frequenz abgestimmt ist, mit der der Motor elektrisch angesteuert wird. Tatsächlich besitzt der Antriebsstrang mehrere Resonanzfrequenzen. Bei entsprechender Ansteuerung des Motors kann daher erreicht werden, daß die Aufsatzbürste 3 und der Magnet 28 des Antriebsmotors 8 gleichphasig schwingen, wobei sich zwei Schwingungsknoten entlang des Antriebsstrangs ausbilden, wie dies Figur 4 verdeutlicht. Vorteilhafterweise wird hierbei die Aufhängung durch die Blattfedern 14 und 15 so gewählt, dass der durch die viergelenksartige Ausbildung der Lagervorrichtung 10 definierte virtuelle Drehpunkt 10 in einem der Schwingungsknoten 32 liegt, während der andere Schwingungsknoten 33 im Bereich der Aufsatzbürste 3 liegt, der beim Zähneputzen etwa im Bereich der Lippen zu liegen kommt.

Die Ansteuerung des Antriebsmotors 8 durch die Steuervorrichtung 21 kann unterschiedlich gestaltet werden. Vorteilhafterweise kann die Ansteuerung des Antriebsmotors 8 mit konstanter Frequenz erfolgen, was durch einen sehr geringen schaltungstechnischen Aufwand erreicht werden kann. Vorteilhafterweise können bei abfallender Versorgungsspannung, beispielsweise bei schwächer werdenden Batterien, die Ansteuerimpulse verbreitert werden, um die Vibrationsamplitude konstant zu halten. In Weiterbildung der Erfindung kann die Motoramplitude mittels der vom Motor induzierten Spannung oder einem Motoramplitudensensor gemessen und in Abhängigkeit dieses Messsignals konstant geregelt werden.

In Weiterbildung der Erfindung ist die Steuervorrichtung 21 mit einer Querbelastungserfassungseinrichtung 19 verbunden, die eine auf den Antriebsübertrager 7 quer wirkende Belastung und folglich die Andruckkräfte der Zahnbürste beim Putzen erfasst. Durch die beschriebene Aufhängung des Antriebsübertragers 7 durch die Lagervorrichtung 9 entsteht bei Druck auf die Aufsatzbürste 3 eine relative Auslenkung des Magneten 28 des Antriebsmotors 8, die sich beispielsweise mittels eines Magnetfeldsensors 20 leicht messen lässt. Das Signal des Magnetfeldsensors 20, das den Andruck der Zahnbürste beim Putzen quantitativ angibt, kann von der Steuervorrichtung 20 in verschiedener Art und Weise genutzt werden. Beispielsweise kann eine nicht näher gezeichnete Benutzeranzeige angesteuert werden, um den Benutzer ein Signal bei zu hohem Anpreßdruck zu geben. Vorteilhafterweise kann die Steuervorrichtung 21 auch die Motoramplitude bei zu hohem Anpreßdruck reduzieren. Zudem kann die Steuervorrichtung 21 eine Startautomatik verwirklichen, die den Antriebsmotor 8 erst dann in Gang setzt, wenn ein bestimmter Anpreßdruck für eine bestimmte Zeit anliegt.

Die Schrägstellung der Blattfedern 14 und 15 kann an die Ausbildung von Zahnbürstenhandteil 2 und Aufsatzbürste 3, insbesondere an deren Dimensionen und Massenverteilung, angepasst werden. Bei der in Figur 1 gezeichneten Ausführung beträgt der Winkel 16 zwischen den Blattfedern 14 und 15 zwischen 20° und 40°, wodurch bei Anordnung der Blattfedern 14 und 15 im vorderen Drittel des Handteilgehäuses 4 die gewünschte Lage des Drehpunktes 10 außerhalb des Handteilgehäuses 4 im Bereich des Bürstenrohrs 23 der Aufsatzbürste 3 erreicht wird.

Durch die von der vorliegenden Erfindung vorgeschlagenen Aufhängung des Antriebsübertragers 7 und die Ausbildung des diesem zugeordneten Antriebsmotors 8 in Form eines einfachen Linearantriebs werden beträchtliche Vorteile erreicht. Im Handstück treten nur geringe Vibrationen auf, wobei im Bereich des Borstenfelds eine große Putzamplitude erzielt wird, während gleichzeitig im Bereich der Lippen nur eine kleine Schwingungsamplitude vorliegt. Die Frequenz ist grundsätzlich unabhängig von der Betriebsspannung steuerbar und unabhängig von der Belastung, Alterung, Temperatur oder sonstigen Einflüssen. Es kann eine relativ stabile Amplitude auch ohne besondere Regelungsmaßnahmen erreicht werden, zudem können Amplitude und Frequenz der Schwingungsbewegung der Aufsatzbürste sehr einfach und voneinander unabhängig verstellt werden. Hierdurch werden verschiedene Betriebsmodi, wie beispielsweise sanfter Betrieb oder Massagebetrieb, möglich. Überdies zeichnet sich der einfache Motoraufbau durch seine günstigen Herstellkosten und gleichzeitig durch einen kompakten Aufbau aus.

## Patentansprüche

1. Zahnbürstenhandteil einer elektrischen Zahnbürste (1), mit einem Handteilgehäuse (4), einem auf einer ersten Gehäuseseite (5) aus dem Handteilgehäuse (4) herausragenden Antriebsübertrager (7) für eine Aufsatzbürste (3), sowie einem Antriebsmotor (8) zur Bewegung des Antriebsübertragers (7), wobei der Antriebsübertrager (7) durch eine Lagervorrichtung (9) im Inneren des Handteilgehäuses (4) nach Art einer Wippe derart gelagert ist, dass der Antriebsübertrager (7) quer zu seiner Längsrichtung vom Antriebsmotor (8) hin und her schwenkbar ist, **dadurch gekennzeichnet, dass** der Antriebsübertrager (7) von der Lagervorrichtung (9) schwenkbar um einen virtuellen Drehpunkt (10) gehalten ist, der außerhalb des Handteilgehäuses (4) liegt, wobei die Lagervorrichtung (9) eine mehrgelenkige Aufhängung mit zwei Lagerschenkeln (12, 13) umfasst, die einenends gelenkig an dem Antriebsübertrager (7) befestigt und anderenends gelenkig an dem Handteilgehäuse (4) oder einem handteilgehäusefesten Teil befestigt sind.

2. Zahnbürstenhandteil nach Anspruch 1, wobei der Antriebsübertrager stabförmig ist.

3. Zahnbürstenhandteil nach Anspruch 1 oder Anspruch 2, wobei die mehrgelenkige Aufhängung in Form eines Viergelenks vorgesehen ist.

4. Zahnbürstenhandteil nach einem der vorhergehenden Ansprüche, wobei die Lagervorrichtung (9) zwei Federelemente, beispielsweise Blattfedern (14, 15) umfasst, die die Lagerschenkel (12, 13) bilden und die nach Art eines Viergelenks den Antriebsübertrager (7) in dem Handteilgehäuse (4) lagern und einenends an dem Antriebsübertrager (7) befestigt und anderenends an dem Handteilgehäuse (4) oder einem handteilgehäusefesten Teil befestigt sind.

5. Zahnbürstenhandteil nach Anspruch 3, wobei die Lagerschenkel (12, 13) auf gegenüberliegenden Seiten des Antriebsübertragers (7) zueinander spitzwinklig geneigt zum virtuellen Drehpunkt (10) des Antriebsübertragers (7) hin zusammenlaufend angeordnet sind.

6. Zahnbürstenhandteil nach dem vorhergehenden Anspruch, wobei die Lagerschenkel (12, 13) oder Biegefedern (14, 15) derart zueinander geneigt sind, dass gedachte Verlängerungslinien durch die Längsachsen der Lagerschenkel (12, 13) oder Biegefedern (14, 15) einen Schnittpunkt auf der Längsachse des Antriebsübertragers (7) außerhalb des Handteilgehäuses (4) definieren.

7. Zahnbürstenhandteil nach einem der beiden vorhergehenden Ansprüche, wobei die Lagerschenkel (12, 13) oder Biegefedern (14, 15) zueinander einen Winkel (16) einschließen, der zwischen 10° und 60° beträgt.

8. Zahnbürstenhandteil nach einem der vorhergehenden Ansprüche, wobei der Antriebsmotor (8) Mittel zur Erzeugung einer linearen hin- und hergehenden Antriebsbewegung in einer Antriebsebene (17) aufweist.

9. Zahnbürstenhandteil nach einem der vorhergehenden Ansprüche, wobei dem Antriebsübertrager (7) oder dem Antriebsmotor (8) eine Querbelastungserfassungseinrichtung (19) zur Erfassung einer Zahnbürstenandruckkraft zugeordnet ist.

10. Zahnbürstenhandteil nach dem vorhergehenden Anspruch, wobei die Querbelastungserfassungseinrichtung (19) Mittel zur Erfassung einer Belastung des Antriebsmotors (8) aufweist.

11. Zahnbürstenhandteil nach dem vorhergehenden Anspruch, wobei die Querbelastungserfassungseinrichtung (19) einen Magnetfeldsensor (20) zur Erfassung eines in dem Antriebsmotor (8) herrschenden Magnetfelds aufweist.

12. Zahnbürstenhandteil nach einem der drei vorhergehenden Ansprüche, wobei eine Steuervorrichtung (21) zur Ansteuerung des Antriebsmotors (8) in Abhängigkeit eines Signals der Querbelastungserfassungseinrichtung (19) vorgesehen ist.

13. Zahnbürstenhandteil nach dem vorhergehenden Anspruch, wobei die Steuervorrichtung (20) Mittel zur Veränderung einer Schwingungsamplitude und/oder einer Schwingungsfrequenz des Antriebsmotors (8) in Abhängigkeit des Signals der Querbelastungserfassungseinrichtung (19) aufweist.

14. Elektrische Zahnbürste mit einem Zahnbürstenhandteil (2) nach einem der vorhergehenden Ansprüche und einer an dem Antriebsübertrager (7) des Zahnbürstenhandteils (2) befestigten Aufsatzbürste (3).

15. Zahnbürste nach dem vorhergehenden Anspruch, wobei der von der Lagervorrichtung (9) definierte virtuelle Drehpunkt (10) für den Antriebsübertrager (7) in einem Bürstenrohrabschnitt der auf das Zahnbürstenhandteil (2) aufgesetzten Aufsatzbürste (3) zwischen einem Borstenfeld (22) der Aufsatzbürste (3) und einem handteilseitigen Ende der Aufsatzbürste (3) liegt.

## Claims

1. Toothbrush handle of an electric toothbrush (1), having a handle housing (4); a drive transmitter (7) for an attachment brush (3), said drive transmitter projecting, on a first housing side (5), from the handle housing (4); and a drive motor (8) for movement of the drive transmitter (7), wherein the drive transmitter (7) is borne by a bearing device (9) inside the handle housing (4) in the manner of a rocker, such that the drive transmitter (7) can be pivoted back and forth transversely to its longitudinal direction by the drive motor (8), **characterized in that** the drive transmitter (7) is held by the bearing device (9) so as to be pivotable around a virtual pivot point (10) that is situated outside of the handle housing (4), wherein the bearing device (9) comprises a multiple-joint suspension with two bearing legs (12, 13) that, at one end, are attached in an articulated manner to the drive transmitter (7), and, at the other end, are attached in an articulated manner to the handle housing (4), or to a part affixed to the handle housing.

2. Toothbrush handle according to claim 1, wherein the drive transmitter is rod-shaped.

3. Toothbrush handle according to claim 1 or claim 2, wherein the multiple-joint suspension is provided in the form of a quadruple joint.

4. Toothbrush handle according to one of the preceding claims, wherein the bearing device (9) comprises two spring elements, e.g., leaf springs (14, 15), that form the bearing legs (12, 13) and that bear the drive transmitter (7) in the handle housing (4) in the manner of a quadruple joint, and are attached at one end to the drive transmitter (7) and at the other end to the handle housing (4), or to a part affixed to the handle housing.

5. Toothbrush handle according to claim 3, wherein the bearing legs (12, 13) on opposite sides of the drive transmitter (7) are arranged to be acutely inclined toward one another, converging towards a virtual pivot point (10) of the drive transmitter (7).

6. Toothbrush handle according to the preceding claim, wherein the bearing legs (12, 13) or elastic springs (14, 15) are inclined relative to one another such that imaginary extension lines through the longitudinal axes of the bearing legs (12, 13) or elastic springs (14, 15) define an intersection point on the longitudinal axis of the drive transmitter (7), outside of the handle housing (4).

7. Toothbrush handle according to one of the two preceding claims, wherein the bearing legs (12, 13) or elastic springs (14, 15) enclose an angle (16) relative to one another that is between 10° and 60°.

8. Toothbrush handle according to one of the preceding claims, wherein the drive motor (8) has means for generating a linear, back-and-forth drive motion in a drive plane (17).

9. Toothbrush handle according to one of the preceding claims, wherein a transverse load detection device (19) for detecting a toothbrush contact pressure force is associated with the drive transmitter (7) or the drive motor (8).

10. Toothbrush handle according to the preceding claim, wherein the transverse load detection device (19) has means for detecting a load of the drive motor (8).

11. Toothbrush handle according to the preceding claim, wherein the transverse load detection device (19) has a magnetic field sensor (20) for detecting a magnetic field prevailing in the drive motor (8).

12. Toothbrush handle according to one of the three preceding claims, wherein a control device (21) is provided for controlling the drive motor (8) as a function of a signal of the transverse load detection device (19).

13. Toothbrush handle according to the preceding claim, wherein the control device (20) has means for varying an oscillation amplitude and/or an oscillation frequency of the drive motor (8) as a function of the signal of the transverse load detection device (19).

14. Electric toothbrush having a toothbrush handle (2) according to one of the preceding claims and having an attachment brush (3) attached to the drive transmitter (7) of the toothbrush handle (2).

15. Toothbrush according to the preceding claim, wherein the virtual pivot point (10), defined by the bearing device (9), for the drive transmitter (7) is situated in a brush tube segment of the attachment brush (3), placed on the toothbrush handle (2), between a bristle field (22) of the attachment brush (3) and a handle-side end of the attachment brush (3).

## Revendications

1. Pièce à main de brosse à dents d'une brosse à dents (1) électrique, pourvue d'un boîtier (4) de pièce à main, d'un transmetteur d'entraînement (7) dépassant sur un premier côté (5) du boîtier hors du boîtier (4) de pièce à main pour une brosse rapportée (3) ainsi que d'un moteur d'entraînement (8) pour le mouvement du transmetteur d'entraînement (7), le transmetteur d'entraînement (7) étant logé à l'intérieur du boîtier (4) de pièce à main par un dispositif de logement (9) de la manière d'une bascule, de manière telle que le transmetteur d'entraînement (7) peut être basculé en va-et-vient transversalement par rapport à sa direction longitudinale par le moteur d'entraînement (8), **caractérisée en ce que** le transmetteur d'entraînement (7) est maintenu par le dispositif de logement (9) de manière à pouvoir basculer autour d'un point de rotation (10) virtuel qui se situe en dehors du boîtier (4) de pièce à main, le dispositif de logement (9) comprenant une suspension multiarticulée pourvue de deux branches de logement (12, 13) qui sont fixées de manière articulée en une extrémité au transmetteur d'entraînement (7) et en l'autre extrémité au boîtier (4) de pièce à main ou à une partie fixe du boîtier de pièce à main.

2. Pièce à main de brosse à dents selon la revendication 1, le transmetteur d'entraînement étant en forme de tige.

3. Pièce à main de brosse à dents selon la revendication 1 ou la revendication 2, la suspension multiarticulée étant réalisée sous forme d'un quadrilatère articulé.

4. Pièce à main de brosse à dents selon l'une quelconque des revendications précédentes, le dispositif de logement (9) comprenant deux éléments à ressort, par exemple des ressorts à lame (14, 15) qui forment les branches de logement (12, 13), et qui logent de la manière d'un quadrilatère articulé le transmetteur d'entraînement (7) dans le boîtier (4) de pièce à main et qui sont fixés en une extrémité au transmetteur d'entraînement (7) et en l'autre extrémité au boîtier (4) de pièce à main ou à une partie fixe du boîtier de pièce à main.

5. Pièce à main de brosse à dents selon la revendication 3, les branches de logement (12, 13) étant disposées de manière inclinée sous un angle aigu l'une par rapport à l'autre sur des côtés opposés du transmetteur d'entraînement (7) tout en convergeant vers le point de rotation (10) virtuel du transmetteur d'entraînement (7).

6. Pièce à main de brosse à dents selon la revendication précédente, les branches de logement (12, 13) ou les ressorts de flexion (14, 15) étant incliné(e)s les un(e)s par rapport aux autres de manière telle que des lignes imaginaires de prolongement à travers les axes longitudinaux des branches de logement (12, 13) ou des ressorts de flexion (14, 15) définissent une intersection sur l'axe longitudinal du transmetteur d'entraînement (7) en dehors du boîtier (4) de pièce à main.

7. Pièce à main de brosse à dents selon l'une quelconque des deux revendications précédentes, les branches de logement (12, 13) ou les ressorts de flexion (14, 15) formant l'un(e) par rapport à l'autre un angle (16) qui se situe entre 10° et 60°.

8. Pièce à main de brosse à dents selon l'une quelconque des revendications précédentes, le moteur d'entraînement (8) présentant des moyens pour générer un mouvement linéaire de va-et-vient dans un plan d'entraînement (17).

9. Pièce à main de brosse à dents selon l'une quelconque des revendications précédentes, un dispositif de détection (19) de contrainte transversale pour la détection d'une force de pression de la brosse à dents étant associé au transmetteur d'entraînement (7) ou au moteur d'entraînement (8).

10. Pièce à main de brosse à dents selon la revendication précédente, le dispositif de détection (19) de contrainte transversale présentant des moyens pour détecter une contrainte du moteur d'entraînement (8).

11. Pièce à main de brosse à dents selon la revendication précédente, le dispositif de détection (19) de contrainte transversale présentant un capteur de champ magnétique (20) pour détecter un champ magnétique qui règne dans le moteur d'entraînement (8).

12. Pièce à main de brosse à dents selon l'une quelconque des trois revendications précédentes, un dispositif de commande (21) commandant le moteur d'entraînement (8) en fonction d'un signal du dispositif de détection (19) de contrainte transversale.

13. Pièce à main de brosse à dents selon la revendication précédente, le dispositif de commande (20) présentant des moyens pour modifier une amplitude d'oscillation et/ou une fréquence d'oscillation du moteur d'entraînement (8) en fonction du signal du dispositif de détection (19) de contrainte transversale.

14. Brosse à dents électrique présentant une pièce à main (2) de brosse à dents selon l'une quelconque des revendications précédentes et une brosse rapportée (3) fixée au transmetteur d'entraînement (7) de la pièce à main (2) de brosse à dents.

15. Brosse à dents selon la revendication précédente, le point de rotation (10) virtuel pour le transmetteur d'entraînement (7) défini par le dispositif de logement (9) étant situé dans une section de tube de brosse de la brosse rapportée (3) placée sur la pièce à main (2) de brosse à dents, entre une zone de poils (22) de la brosse rapportée (3) et une extrémité côté pièce à main de la brosse rapportée (3).
